# FASCICULE DE BREVET EUROPEEN

(11) **EP 1 687 115 B1**
(45) Date de publication et mention de la délivrance du brevet: **07.01.2009**
(21) Numéro de dépôt: 04805532.1
(22) Date de dépôt: 24.11.2004
(51) Int. Cl.: B23K 1/00, B32B 15/00, C22C 21/00, C23C 28/00, C23C 30/00

(54) **BANDE EN ALLIAGE D'ALUMINIUM POUR BRASAGE**
ALUMINIUMLEGIERUNGSSTREIFEN ZUM SCHWEISSEN
ALUMINIUM ALLOY STRIP FOR WELDING

(30) Priorité: 28.11.2003 FR 0314001
(43) Date de publication de la demande: 09.08.2006
(73) Titulaire: ALCAN RHENALU, 75116 Paris (FR); ALCAN ROLLED PRODUCTS RAVENSWOOD LLC, Ravenswood, WV 26164 (US)
(72) Inventeur: DULAC, Sandrine, F-38100 Grenoble (FR); HENRY, Sylvain, F-38500 Voiron (FR)
(74) Mandataire: Marsolais, Richard
(86) Numéro de dépôt international: PCT/FR2004/003003
(87) Numéro de publication internationale: WO 2005/061165

(56) Documents cités:
- WO-A-00/71784
- WO-A-99/60323
- WO-A-02/060639
- PATENT ABSTRACTS OF JAPAN vol. 2000, no. 13, 5 février 2001 (2001-02-05) & JP 2000 303132 A (KOBE STEEL LTD; SHINKO ARUKOA YUSO KIZAI KK), 31 octobre 2000 (2000-10-31)

## Description

### Domaine de l'invention

L'invention concerne des bandes en alliage d'aluminium, éventuellement plaquées sur une ou deux faces d'un alliage de brasage, et destinées à la fabrication de pièces brasées, notamment des échangeurs de chaleur pour l'automobile ou le bâtiment, et plus particulièrement de pièces assemblées par brasage sans flux sous atmosphère contrôlée.

### Etat de la technique

Le procédé le plus couramment utilisé pour l'assemblage des échangeurs thermiques automobile est le brasage. Celui-ci est basé sur l'utilisation, pour l'un au moins des composants à assembler, d'une bande plaquée constituée d'un alliage dit « d'âme », revêtu sur une ou deux faces d'un alliage dit « de brasage ». Ce dernier se caractérise par une température de liquidus inférieure d'environ 30°C à la température de solidus de l'alliage d'âme. En appliquant un traitement thermique adapté, il sera possible de ne faire fondre que le placage, qui viendra alors mouiller les surfaces en contact et permettra un bon assemblage après refroidissement de l'ensemble.

Trois techniques différentes de brasage coexistent actuellement:
- La plus répandue est le brasage sous atmosphère contrôlée d'azote, après avoir enduit les pièces à assembler d'un « flux » non corrosif, le plus courant étant le flux Nocolok®. Ce produit, destiné à dissoudre la couche d'oxyde superficielle sur l'aluminium, et par conséquent à augmenter la mouillabilité des surfaces, est de type fluoro-aluminate de potassium. Son utilisation pose un certain nombre de problèmes : le produit a bien sûr un coût intrinsèque ; son dépôt nécessite des installations spécifiques qui souvent empêchent l'automatisation complète des lignes de fabrication des échangeurs ; enfin, un traitement des effluents doit être aménagé.
- Une autre technique, plus ancienne, mais toujours utilisée notamment en Amérique du Nord, est le brasage sous vide. Ce procédé oblige à utiliser des placages contenant du magnésium: cet élément, ségrégé en surface, et se vaporisant dans le vide, permet de capter les traces d'oxygène résiduelles. Il évite ainsi que la couche d'oxyde, initialement brisée par dilatation différentielle, ne se reforme. Aucun flux n'est nécessaire, mais les installations de création du vide sont très lourdes et les frais de maintenance associés très élevés. Pour ces raisons économiques, les lignes existantes sont progressivement abandonnées au profit de lignes Nocolok®.
- Enfin, un troisième procédé, utilisé de façon plus marginale, consiste à déposer en lieu et place du flux, une couche de nickel. Le brasage est ensuite réalisé sous azote. L'énergie libérée pendant le cycle de brasage par la création de phases Al-Ni en surface du placage est suffisante pour rompre la couche d'oxyde.

Le problème principal consiste à réaliser l'opération de brasage sur les lignes Nocolok® existantes, puisque ce sont les plus répandues et les plus économiques, sans utiliser de flux ni d'autre préparation de surface complexe, et sans engendrer de dégradation dans les propriétés finales des échangeurs qui seront assemblés grâce à cette technique.

La solution qui a connu le plus fort développement dans ce domaine est une adaptation du procédé de brasage par dépôt de nickel. Si des techniques de dépôt de plus en plus simplifiées ont bien été mises en place, comme décrit par exemple dans la demande de brevet WO 02/07928 (Corus), elles ne constituent toujours qu'une réponse partielle au problème. Le fabricant d'échangeurs, ou de bandes d'aluminium, dans le cas où l'opération serait réalisée par celui-ci, doit toujours ajouter des installations spécifiques pour une préparation de la surface avant brasage et doit continuer à gérer des effluents, générés cette fois-ci par les bains de nickelage. Par ailleurs, si des progrès ont été rapportés en terme de tenue à la corrosion, comme l'indique la demande de brevet WO 02/060639 (Corus), les performances indiquées n'atteignent pas celles citées par ailleurs pour des produits brasés Nocolok® (voir par exemple la demande de brevet WO 02/40729 de Pechiney Rhenalu).

D'autres solutions sont liées à une adaptation de l'alliage de placage et/ou des conditions d'atmosphère dans les fours de brasage, comme par exemple dans le brevet US 3,811,177 (VAW) qui mentionne l'ajout des éléments Bi, Sr, Ba ou Sb dans la brasure pour modifier sa tension de surface. L'effet du bismuth sur cette dernière propriété est également cité dans le brevet EP 0004096 (Ford). Plus récemment, dans la demande WO 01/98019 de Kaiser Aluminum, l'intérêt d'un ajout de sodium est mentionné, accompagné éventuellement de potassium ou de bismuth. Enfin dans EP 1306207 (Sky Aluminium), la brasure, qui contient Mg et Bi, est recouverte d'une mince couche formée d'un alliage d'aluminium qui restera solide lorsque celle-ci commencera à fondre; elle ne se rompra que tardivement dans le cycle de brasage, libérant le placage liquide qui viendra alors mouiller sa surface supérieure : l'oxydation de la brasure liquide est évitée en travaillant sous atmosphère pendant un temps court. Quant à l'oxyde présent sur la fine couche, il est brisé lorsqu'il se retrouve entouré de liquide.

### But et objet de l'invention

L'invention a pour but de permettre la fabrication par brasage sans flux de pièces brasées en alliage d'aluminium dans des conditions économiques favorables, et notamment en utilisant les mêmes équipements que ceux utilisés pour le brasage avec flux sous atmosphère contrôlée.

L'invention a pour objet une bande ou tôle en alliage d'aluminium contenant de 0,01 à 0,5% d'yttrium et/ou de 0,05 à 0,5% de bismuth, revêtue sur au moins une face d'un alliage de brasage. Le revêtement peut être une couche plaquée par colaminage, par exemple d'un alliage d'aluminium contenant de 4 à 15% de silicium II peut être également une couche comportant des particules d'alliage de brasage, notamment des particules en alliage Al-Si, éventuellement enrobées dans une résine.

L'invention a également pour objet une pièce brasée, notamment un échangeur de chaleur, réalisée à l'aide d'une bande ou tôle en alliage d'aluminium contenant de 0,01 à 0,5% d'yttrium et/ou de 0,05 à 0,5% de bismuth.

### Description des figures

Les figures 1a et 1b représentent, respectivement en vue de dessus et vue de côté, les éprouvettes en V utilisées dans les exemples pour évaluer l'aptitude au brasage.

La figure 2 représente la définition de la largeur du joint brasé dans le test d'aptitude au brasage décrit dans les exemples.

### Description de l'invention

Contrairement à l'ensemble des techniques citées précédemment, l'invention vise à modifier la composition de l'alliage d'âme, de façon à ce que le brasage puisse s'effectuer sans l'aide d'aucun dépôt, et sous condition d'atmosphère contrôlée standard, qu'on peut atteindre sans modification des installations de brasage chez les équipementiers.

De façon quelque peu surprenante, l'ajout de certains éléments dans l'âme, tels que l'yttrium à hauteur d'environ 0,05% ou le bismuth à hauteur d'environ 0,15%, permet d'obtenir, dans le cas d'un brasage sans flux sous azote, une qualité des joints brasés très satisfaisante.

La méthode est applicable à tous les types d'alliages d'aluminium contenant au moins 80% en poids d'aluminium, et notamment ceux dont la composition, avant ajout des éléments spécifiquement destinés à permettre le brasage sans flux, répond aux conditions suivantes (% en poids) :
Si < 1,0 Fe < 1,0 Cu < 1,0 Mn < 2,0. Mg < 3,0 Zn < 6,0 Ti < 0,3 Zr < 0,3 Cr < 0,3 Hf < 0,6 V < 0,3 Ni < 2,0 Co < 2,0 In < 0,3 Sn < 0,3 autres éléments < 0,05 chacun et 0,15 au total, reste aluminium.

La tôle ou bande peut être plaquée par colaminage sur une ou deux faces avec un alliage d'aluminium de brasage, généralement un alliage contenant de 4 à 15% de silicium. L'alliage de brasage peut contenir d'autres éléments d'addition, comme le cuivre, le magnésium ou le zinc. Il peut contenir également des éléments destinés à modifier la tension de surface de l'alliage, tels que Ag, Be, Bi, Ce, La, Pb, Pd, Sb, Y ou du mischmetal, c'est-à-dire un mélange de terres rares non séparées. Dans le cas où l'alliage de brasage est plaqué sur une seule face, l'autre face peut être revêtue, de manière connue en soi, d'un alliage sacrificiel, généralement de type Al-Zn, destiné à améliorer la résistance à la corrosion de l'alliage d'âme.

L'alliage de brasage peut également être déposé sous forme de particules, notamment de particules Al-Si, comme décrit par exemple dans le brevet EP 0568568 (Alcan International). Pour le brasage sous atmosphère contrôlée, les particules d'alliage de brasage sont généralement associées à des particules de flux, en particulier de flux à base de fluorures comme le fluoro-aluminate de potassium, et d'un liant tel qu'une résine polymère. Un avantage particulier de l'invention dans ce cas est d'éviter la présence de flux dans le revêtement.

La tôle en alliage avec addition de bismuth et/ou d'yttrium peut également être utilisée non revêtue lorsqu'elle est associée, pour la fabrication de la pièce brasée, à une autre tôle revêtue d'alliage de brasage.

### Exemples

### Exemple 1

On a coulé quatre plaques d'alliages d'âme de compositions suivantes :

| **Alliage** | **Si** | **Fe** | **Cu** | **Mn** | **Mg** | **Ti** | **Y** | **Bi** | **Ca** |
|---|---|---|---|---|---|---|---|---|---|
| M | 0.40 | 0.22 | 0.63 | 0.57 | 0.47 | 0.08 | - | - | - |
| M + Y | 0.39 | 0.24 | 0.61 | 0.57 | 0.47 | 0.09 | 0.06 | - | - |
| M + Bi | 0.39 | 0.22 | 0.62 | 0.59 | 0.49 | 0.09 | - | 0.15 | - |
| M + Ca | 0.40 | 0.22 | 0.63 | 0.57 | 0.47 | 0.08 | - | - | 0.05 |

ainsi qu'une plaque d'alliage de placage 4047 (Al-12%Si). Des assemblages ont été réalisés à partir de ces plaques de telle sorte que l'épaisseur d'alliage de placage représente 10% de l'épaisseur totale. Ces assemblages ont été laminés à chaud, puis à froid de façon à produire des bandes plaquées d'épaisseur 0,3 mm. Ces bandes ont ensuite été soumises à un traitement de restauration de 10 h à 260°C.

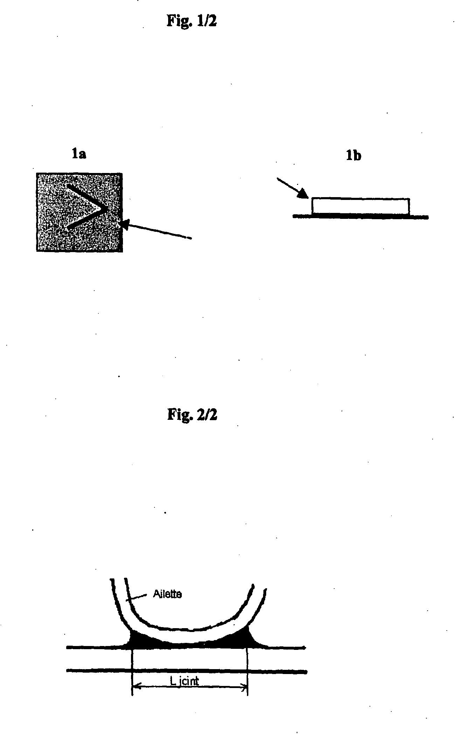

L'éprouvette décrite à la figure 1 a été utilisée pour évaluer la brasabilité de ces matériaux. Le « V » est constitué d'une bande nue en alliage 3003, à l'état H24, et d'épaisseur 0.3 mm. Un traitement de dégraissage de 15 min à 250°C est appliqué au métal à braser. Aucune autre préparation de surface n'est utilisée et en particulier aucun flux n'est déposé. Le brasage se fait dans un four en verre à double paroi qui permet de visualiser les mouvements de brasure liquide et la formation des joints au cours du traitement. Le cycle thermique est composé d'une phase de montée en température jusqu'à 610°C selon une rampe d'environ 20°C/min, d'un maintien de 2 min à 610°C, et d'une descente à environ 30°C/min. Le tout se fait sous balayage continu d'azote, avec un débit de 81/min.

Les résultats sont qualifiés par une note de A à E selon l'échelle suivante :

| **Note** | **A** | **B** | **C** | **D** | **E** |
|---|---|---|---|---|---|
| Longueur de joint formée par rapport à la longueur totale | 100% | 90% | 75% | 50% | 0% |

Les résultats sont indiqués au tableau 1 :

**Tableau 1**

| **Ame** | **Placage** | **Brasabilité** |
|---|---|---|
| M | 4047 | E |
| M + Y | 4047 | A |
| M + Bi | 4047 | A |
| M + Ca | 4047 | E |

On constate l'amélioration de l'aptitude au brasage obtenue par l'addition de Y ou Bi à l'alliage d'âme.

### Exemple 2

De la même manière on a coulé deux plaques de compositions:

| **Alliage** | **Si** | **Fe** | **Cu** | **Mn** | **Mg** | **Ti** | **Y** |
|---|---|---|---|---|---|---|---|
| N | 0.17 | 0.18 | 0.64 | 1.37 | - | 0.08 | - |
| N + Y | 0.19 | 0.17 | 0.67 | 1.32 | - | 0.09 | 0.06 |

ainsi qu'une plaque d'alliage de placage 4045 (Al-10%Si). La gamme de transformation ainsi que les tests réalisés sont exactement du même type que dans l'exemple 1.

Les résultats sont indiqués au tableau 2 :

**Tableau 2**

| **Ame** | **Placage** | **Brasabilité** |
|---|---|---|
| N | 4045 | E |
| N + Y | 4045 | A |

On constate que l'ajout d'yttrium à l'alliage N conduit à une nette amélioration de l'aptitude au brasage.

### Exemple 3

De la même manière on a coulé deux plaques de compositions:

| **Alliage** | **Si** | **Fe** | **Cu** | **Mn** | **Mg** | **Zn** | **Y** |
|---|---|---|---|---|---|---|---|
| P | 0.15 | 0.35 | 0.1 | 0.1 | 0.8 | 0.125 | - |
| P + Y | 0.15 | 0.35 | 0.1 | 0.1 | 0.8 | 0.125 | 0.06 |

ainsi qu'une plaque d'alliage de placage 4045 (Al-10%Si). La gamme de transformation ainsi que les tests réalisés sont exactement du même type que dans l'exemple 1.

Les résultats sont indiqués au tableau 3 :

**Tableau 3**

| **Ame** | **Placage** | **Brasabilité** |
|---|---|---|
| P | 4045 | E |
| P + Y | 4045 | A |

On constate que l'ajout d'yttrium à l'alliage P conduit à une nette amélioration de l'aptitude au brasage.

## Revendications

1. Bande ou tôle en alliage d'aluminium d'âme contenant au moins 80% en poids d'aluminium, de 0,01 à 0,5% d'yttrium et/ou de 0,05 à 0,5% de bismuth, ainsi que les éléments suivants à des teneurs telles que :
Si < 1,0 Fe < 1,0 Cu < 1,0 Mn < 2,0 Mg < 3,0 Zn < 6,0, Ti < 0,3 Zr < 0,3 Cr < 0,3 Hf < 0,6 V < 0,3 Ni < 2,0 Co < 2,0 In < 0,3 Sn < 0,3 autres éléments < 0,05 chacun et 0,15 au total, reste aluminium, ladite bande ou tôle étant revêtue sur au moins une face d'un alliage d'aluminium de brasage.

2. Bande ou tôle selon la revendication 1, **caractérisée en ce que** l'alliage de brasage est un alliage contenant de 4 à 15% en poids de silicium.

3. Bande ou tôle selon la revendication 1, **caractérisée en ce que** l'alliage de brasage contient au moins un élément destiné à modifier la tension de surface de l'alliage, tel que Ag, Be, Bi, Ce, La, Pb, Pd, Sb, Y ou du mischmetal.

4. Bande ou tôle selon l'une des revendications 1 à 3, **caractérisée en ce que** le revêtement d'alliage de brasage est une couche plaquée obtenue par colaminage avec l'alliage d'aluminium de base.

5. Bande ou tôle selon l'une des revendications 1 à 3, **caractérisée en ce que** le revêtement d'alliage de brasage est constitué de particules, éventuellement enrobées dans une couche de résine.

6. Pièce brasée réalisée à l'aide d'une bande ou tôle en alliage d'aluminium contenant de 0,01 à 0,5% d'yttrium et/ou de 0,05 à 0,5% de bismuth, ainsi que les éléments suivants à des teneurs telles que :
Si < 1,0 Fe < 1,0 Cu < 1,0 Mn < 2,0 Mg < 3,0 Zn < 6,0, Ti < 0,3 Zr < 0,3 Cr < 0,3 Hf < 0,6 V < 0,3 Ni < 2,0 Co < 2,0 In < 0,3 Sn < 0,3 autres éléments < 0,05 chacun et 0,15 au total, reste aluminium.

7. Pièce brasée selon la revendication 6, **caractérisée en ce que** la bande ou tôle utilisée est revêtue d'un alliage de brasage.

8. Pièce brasée selon la revendication 7, **caractérisée en ce que** la bande ou tôle utilisée est revêtue de particules d'alliage de brasage, éventuellement enrobées dans une couche de résine.

## Claims

1. Core aluminium alloy strip or sheet containing at least 80% by weight of aluminium, 0.01 to 0.5% of yttrium and / or 0.05 to 0.5% of bismuth, and the following elements with contents such that:
Si < 1.0; Fe < 1.0; Cu < 1.0; Mn < 2.0; Mg < 3.0; Zn < 6.0; Ti < 0.3; Zr < 0.3; Cr < 0.3; Hf < 0.6; V < 0.3; Ni < 2.0; Co < 2.0; In < 0.3; Sn < 0.3 other elements < 0.05 each and 0.15 total, remainder aluminium, the said strip or sheet being coated on at least one face with a welding aluminium alloy.

2. Strip or sheet according to claim 1, **characterised in that** the welding alloy is an alloy containing 4 to 15% by weight of silicon.

3. Strip or sheet according to claim 1, **characterised in that** the welding alloy contains at least one element designed to modify the surface tension of the alloy, such as Ag, Be, Bi, Ce, La, Pb, Pd, Sb, Y or mischmetal.

4. Strip or sheet according to one of claims 1 to 3, **characterised in that** the welding alloy coating is a layer cladded by co-rolling with the basic aluminium alloy.

5. Strip or sheet according to one of claims 1 to 3, **characterised in that** the welding alloy coating is composed of particles, possibly coated in a resin layer.

6. Welded part made using an aluminium alloy strip or sheet containing 0.01 to 0.5% of yttrium and / or 0.05 to 0.5% of bismuth, and the following elements with contents such that:
Si < 1.0; Fe < 1.0; Cu < 1.0; Mn < 2.0; Mg < 3.0; Zn < 6.0; Ti < 0.3; Zr < 0.3; Cr < 0.3; Hf < 0.6; V < 0.3; Ni < 2.0; Co < 2.0; In < 0.3; Sn < 0.3 other elements < 0.05 each and 0.15 total, remainder aluminium.

7. Welded part according to claim 6, **characterised in that** the strip or sheet used is coated with a welding alloy.

8. Welded part according to claim 7, **characterised in that** the strip or sheet used is coated with welding alloy particles, possibly coated in a resin layer.

## Patentansprüche

1. Band oder Blech aus einer Aluminium-Kernlegierung enthaltend mindestens 80 Gew.-% Aluminium, 0,01 bis 0,5 % Yttrium und/oder 0,05 bis 0,5 % Bismut sowie folgende Elemente in Gehalten von:
Si < 1,0 Fe < 1,0 Cu < 1,0 Mn < 2,0 Mg < 3,0 Zn < 6,0 Ti<0,3 Zr<0,3 Cr<0,3 Hf < 0,6 V<0,3 Ni<2,0 Co < 2,0 In < 0,3 Sn < 0,3 weitere Elemente jeweils < 0,05 und insgesamt 0,15, Rest Aluminium, wobei das Band oder Blech auf mindestens einer Seite mit einer Aluminium-Lötlegierung überzogen ist.

2. Band oder Blech nach Anspruch 1, **dadurch gekennzeichnet, dass** die Lötlegierung eine Legierung enthaltend 4 bis 15 Gew.-% Silicium ist.

3. Band oder Blech nach Anspruch 1, **dadurch gekennzeichnet, dass** die Lötlegierung mindestens ein Element zur Modifizierung der Oberflächenspannung der Legierung enthält, wie Ag, Be, Bi, Ce, La, Pb, Pd, Sb, Y oder Mischmetall.

4. Band oder Blech nach einem der Ansprüche 1 bis 3, **dadurch gekennzeichnet, dass** der Lötlegierungsüberzug eine durch Colaminieren mit einer Aluminium-Basislegierung hergestellte plattierte Schicht ist.

5. Band oder Blech nach einem der Ansprüche 1 bis 3, **dadurch gekennzeichnet, dass** der Lötlegierungsüberzug aus eventuell in einer Harzschicht eingebetteten Teilchen besteht.

6. Gelötetes Teil, hergestellt unter Verwendung eines Bandes oder Blechs aus einer Aluminiumlegierung enthaltend 0,01 bis 0,5 % Yttrium und /oder 0,05 bis 0,5 % Bismut sowie folgende Elemente in Gehalten von:
Si < 1,0 Fe < 1,0 Cu < 1,0 Mn < 2,0 Mg < 3,0 Zn < 6,0 Ti<0,3 Zr<0,3 Cr<0,3 Hf < 0,6 V<0,3 Ni<2,0 Co < 2,0 In < 0,3 Sn < 0,3 weitere Elemente jeweils < 0,05 und insgesamt 0,15, Rest Aluminium.

7. Gelötetes Teil nach Anspruch 6, **dadurch gekennzeichnet, dass** das verwendete Band oder Blech mit einer Lötlegierung überzogen ist.

8. Gelötetes Teil nach Anspruch 7, **dadurch gekennzeichnet, dass** das verwendete Band oder Blech mit eventuell in einer Harzschicht eingebetteten Lötlegierungsteilchen überzogen ist.
